# EUROPEAN PATENT SPECIFICATION

(11) **EP 3 437 860 B1**
(45) Date of publication and mention of the grant of the patent: **09.06.2021**
(21) Application number: 17774999.1
(22) Date of filing: 28.03.2017
(51) Int. Cl.: B32B 27/10, B32B 27/00, B32B 27/30, B65D 65/40, B65D 81/24, D21H 19/20, D21H 19/82, D21H 27/30, D21H 27/10

(54) **PAPER-MADE BARRIER MATERIAL**
BARRIEREMATERIAL AUS PAPIER
MATÉRIAU FORMANT BARRIÈRE CONSTITUÉ DE PAPIER

(30) Priority: 28.03.2016 JP 2016062934; 04.11.2016 JP 2016216063
(43) Date of publication of application: 06.02.2019
(73) Proprietor: Nippon Paper Industries Co., Ltd., Tokyo 114-0002 (JP)
(72) Inventor: OKAMOTO Masashi, Tokyo 114-0002 (JP); OISHI Yuri, Tokyo 114-0002 (JP); KATO Masatsugu, Tokyo 114-0002 (JP); FUKUNAGA Masaaki, Tokyo 114-0002 (JP)
(74) Representative: Grünecker Patent- und Rechtsanwälte PartG mbB
(86) International application number: PCT/JP2017/012500
(87) International publication number: WO 2017/170462

(56) References cited:
- EP-A1- 2 777 934
- WO-A1-2013/069788
- JP-A- H10 249 978
- JP-A- 2000 303 386
- JP-A- 2008 087 784
- JP-A- 2014 237 309
- DATABASE WPI Week 201361 Thomson Scientific, London, GB; AN 2013-N07739 XP002793364, & JP 2013 176950 A (NIPPON PAPER IND CO LTD) 9 September 2013 (2013-09-09)

## Description

### Technical Field

The present invention relates to a paper barrier material used for food packaging materials, containers, cups.

### Background Art

Adding gas barrier property (especially oxygen barrier property) to packaging materials made of paper is important in protecting the various packaged products from deterioration due to gas, such as oxidization caused by oxygen, for example.

Traditionally, a primary method for adding gas barrier property to a paper packaging material has been to extrusion-laminate over, or attach to, a paper base material (base paper), a gas barrier layer being a metal foil or metal deposition film constituted by aluminum or other metal, a polyvinyl alcohol or ethylene-vinyl alcohol copolymer, polyvinylidene chloride, polyacrylonitrile or other resin film, or a film coated with any such resin, or a ceramic deposition film on which silicon oxide, aluminum oxide or other inorganic oxide has been deposited.

Other paper packaging materials to which gas barrier property has been added, which are publicly disclosed, include paper gas barrier materials having a gas barrier layer constituted by a water-soluble polymer and an inorganic layer-like compound (Patent Literature 1, Patent Literature 2), and a paper gas barrier material comprising a covered layer and a barrier layer constituted by a specific vinyl alcohol polymer (Patent Literature 2).

Also, adding water resistance (especially water vapor barrier property) to paper packaging materials is important in protecting the various packaged products from deterioration due to water vapor.

A primary method for adding water vapor barrier property to a paper packaging material has been to extrusion-laminate over, or attach to, a paper base material, a resin film offering excellent water vapor barrier property, or a film coated with such resin offering excellent water vapor barrier property.

Paper packaging materials to which water vapor barrier property has been added by any other method, which are publicly disclosed, include a packaging paper having a moisture-proof layer constituted by synthetic resin latex, wax, or inorganic fine grains (Patent Literature 3).

Also, among paper packaging materials to which both gas barrier property and water vapor barrier property have been added, packaging materials comprising a paper base material laminated with a resin having gas barrier property and a resin having water vapor barrier property, are known.
EP-A-2 777 934 relates to a paper based material used for a food packaging material, a food container and a food cup; JP-A-2013-176950 describes a paper-made barrier material comprising a water vapor-barrier resin and a gas barrier layer containing water-soluble polymer on paper base material.

### Background Art Literature

### Patent Literature

Patent Literature 1: Japanese Patent Laid-open No. 2009-184138
Patent Literature 2: Japanese Patent Laid-open No. 2003-094574
Patent Literature 3: Japanese Patent Laid-open No. 2005-162213

### Summary of the Invention

### Problems to Be Solved by the Invention

However, packaging materials constituted by a paper base material (base paper) laminated with a resin having gas barrier property and a resin having water vapor barrier property limit the types of resin that can be used for lamination, and thereby present a problem in that they cannot meet various quality requirements.

On the other hand, packaging materials constituted by a paper base material (base paper) to which gas barrier property and water vapor barrier property have been added by means of coating with resins having these properties, present fewer limitations in terms of which types of resin can be used, and thus can meet various quality requirements. However, providing a moisture-proof layer according to Patent Literature 3 on a packaging material to which both gas barrier property and water vapor barrier property have been added, such as a packaging material having gas barrier property according to Patent Literature 1 or Patent Literature 2, presents a problem in that, although good water vapor barrier property can be achieved, gas barrier property cannot be achieved. In addition, providing a gas barrier layer according to Patent Literature 1 or Patent Literature 2 on a moisture-proof paper having a water vapor barrier layer according to Patent Literature 3, does not achieve sufficient gas barrier property because a low surface tension of the moisture-proof layer prevents a uniform gas barrier layer from being formed due to repellence.

Accordingly, an object of the present invention is to provide a paper barrier material having excellent gas barrier property as well as excellent water vapor barrier property, comprising a water vapor barrier layer and a gas barrier layer provided on a paper base material in this order.

### Means for Solving the Problems

The present invention is defined by the claims.

### Effects of the Invention

According to the present invention, a paper barrier material having excellent gas barrier property as well as excellent water vapor barrier property, comprising a water vapor barrier layer and a gas barrier layer provided on a paper base material in this order, can be provided.

### Mode for Carrying Out the Invention

The present invention relates to a paper barrier material comprising a paper base material (hereinafter also referred to as "base paper") on which multiple coating layers have been provided, wherein such paper barrier material is characterized in that the multiple coating layers include, in this order, a water vapor barrier layer formed on the paper base material, and a gas barrier layer formed on the water vapor barrier layer and containing a water-soluble polymer, and that the water vapor barrier layer contains a water vapor barrier resin and a water repellent, while the gas barrier layer contains a water-soluble polymer and a surface-active agent.

The paper barrier material proposed by the present invention has excellent water vapor barrier property as well as excellent gas barrier property, presumably for the reasons described below.

As illustrated by example below, water-soluble polymers are generally used for gas barrier layers as resins having gas barrier property, and when a gas barrier layer and a water vapor barrier layer are provided on a paper base material in this order, the gas barrier layer containing a water-soluble polymer deteriorates due to moisture in the paper base material, and moisture in the air that permeates through the paper base material. On the other hand, when a water vapor barrier layer containing a resin having good water resistance, and a gas barrier layer are provided on a paper base material in this order, the water vapor barrier layer can prevent the gas barrier layer from being affected by (deteriorating due to) moisture in the paper base material. This is why the paper barrier material proposed by the present invention has good water vapor barrier property and gas barrier property.

### (Paper Base Material)

Under the present invention, the paper base material is a sheet made of pulp, filler, and any of various auxiliary agents. For the pulp, leaf bleached kraft pulp (LBKP), needle bleached kraft pulp (NBKP), sulfite pulp (SP) or other chemical pulp; stone groundwood pulp (SGP), thermo-mechanical pulp (TMP), chemi-thermo-mechanical pulp (CTMP) or other mechanical pulp; de-inked pulp (DIP); non-wood fibers derived from kenaf, bamboo, and hemp may be used, where two or more of the foregoing can be combined as deemed appropriate. Among these, use of chemical pulp is preferred, while use of leaf bleached kraft pulp (LBKP) or needle bleached kraft pulp (NBKP) is more preferred, for reasons that include not allowing foreign matter to mix into the base paper easily, not allowing discoloration over time to occur easily in the products made with recycled paper containers that use the pulp, and having a high degree of whiteness which in turn achieves good surface texture when printed and thereby adds high value to the packaging materials using the pulp.

For the filler, white carbon, talc, kaolin, clay, ground calcium carbonate, precipitated calcium carbonate, titanium oxide, zeolite, synthetic resin filler, or any other known filler may be used. In addition, aluminum sulfate or any of various anionic, cationic, nonionic, or amphoteric retention aids, drainage aids, paper strength enhancing agents, internal sizing agents, and other internal auxiliary agents used for papermaking may be used, as necessary. Furthermore, any dye, fluorescent whitening agent, pH adjusting agent, defoaming agent, pitch control agent, slime control agent, may also be added, as necessary.

In the method for manufacturing paper base material (papermaking method) the paper base material may be manufactured according to the acid papermaking, neutral papermaking, or alkali papermaking method using any known Fourdrinier former, on-top hybrid former, gap former machine, or cylinder former machine. In addition, preferably the paper base material has a grammage of 20 g/m² or more but no greater than 500 g/m² based on use for general coated base paper. Furthermore, the surface of the paper base material can be treated with various chemical agents. Examples of chemical agents that may be used include oxidized starch, hydroxy ethyl etherified starch, oxygen-modified starch, polyacrylamide, polyvinyl alcohol, surface sizing agent, water-resistant additive, moisture-keeping agent, thickening agent, and lubricant. Any of the foregoing may be used alone, or two or more of them may be combined. In the method for treating the surface of the paper base material any known coating machine such as a rod-metering size press, pond size press, gate-roll coater, spray coater, blade coater, curtain coater, may be used.

### (Water Vapor Barrier Layer)

With the paper barrier material proposed by the present invention, it is important that the water vapor barrier layer contains a water vapor barrier resin and a water repellent.

Under the present invention, the water vapor barrier resin (hereinafter also referred to as "resin") may be a styrene-butadiene, styrene-acrylic, ethylene-vinyl acetate, butadiene-methyl methacrylate, vinyl acetate-butyl acrylate copolymer or any of various other copolymers, maleic anhydride copolymer, acrylate-methyl methacrylate copolymer or other synthetic adhesive, which may be used alone, or two or more of them may be combined. Among these, styrene-acrylate copolymer is preferred from the viewpoint of water vapor barrier property. It should be noted that, so long as doing so does not present problems in terms of water vapor barrier property, a water-soluble polymer such as polyvinyl alcohol, maleic anhydride copolymer, acrylate-methyl methacrylate copolymer or other synthetic adhesive, casein, soybean protein, synthetic protein or other protein, oxidized starch, cationic starch, urea phosphate esterified starch, hydroxy ethyl etherified starch or other starch, carboxy methyl cellulose, hydroxy methyl cellulose, hydroxy ethyl cellulose or other cellulose derivative, may be combined with the aforementioned resin.

The water repellent contained in the water vapor barrier layer proposed by the present invention, is a paraffin water repellent primarily constituted by alkane compound, carnauba, lanolin, and other water repellents based on animal or plant-based natural oil, silicone-containing water repellents that contain silicone or silicone compound, and fluorine-containing water repellents that contain fluorine compound, among which use of paraffin water repellent is preferred from the viewpoint of expression of water vapor barrier performance. Also, any one of these water repellents may be used alone, or two or more of them may be combined.

Under the present invention, the blending ratio (in dry weight) of the water vapor barrier resin and the water repellent is 1 part by weight or more but no more than 1000 parts by weight (in dry weight) of water repellent, relative to 100 parts by weight (in dry weight) of water vapor barrier resin. If the blending quantity of the water repellent is 1 part by weight or more but less than 100 parts by weight, the gas barrier layer is likely formed uniformly and therefore excellent gas barrier property can be expressed. Additionally, if the blending quantity of the water repellent is 100 parts by weight or more but no more than 1000 parts by weight, the water repelling effect is enhanced further and therefore excellent water vapor barrier property can be expressed. If the blending quantity of the water repellent is less than 1 part by weight, on the other hand, sufficient water vapor barrier property may not be achieved. Furthermore, if the blending quantity exceeds 1000 parts by weight, the gas barrier layer to be provided on the water vapor barrier layer cannot be formed uniformly, and therefore sufficient gas barrier property may not be expressed.

Under the present invention, preferably a pigment is contained in the water vapor barrier layer from the viewpoint of adhesion between the water vapor barrier layer and the gas barrier layer. For the pigment, kaolin, clay, engineered kaolin, delaminated clay, ground calcium carbonate, precipitated calcium carbonate, mica, talc, titanium dioxide, barium sulfate, calcium sulfate, zinc oxide, silicate, silicate salt, colloidal silica, satin white, or other inorganic pigment, or solid, hollow, or core-shell type organic pigment,may be used alone, or two or more of them may be combined. Among these pigments, kaolin, mica, talc, or other inorganic pigment whose shape is flat, is preferred from the viewpoints of both improving the water vapor barrier property and inhibiting the permeation of the gas (oxygen) barrier layer, wherein preferably any of inorganic pigments whose average grain size is 5 µm or greater and aspect ratio is 10 or greater, is used alone, or two or more of them are combined.

In addition, preferably a pigment whose average grain size is 5 µm or smaller is contained in the water vapor barrier layer that contains the aforementioned pigment whose average grain size is 5 µm or greater and aspect ratio is 10 or greater, to further improve adhesion between the water vapor barrier layer and the gas barrier layer. The resulting structure is such that the pigment whose average grain size is 5 µm or smaller enters between the pigment grains present in multiple layers whose average grain size is 5 µm or greater and aspect ratio is 10 or greater, and consequently the water vapor, which has nowhere to go but to move along the flat pigment surface, is prevented, by these small pigment grains, from moving. In other words, because the water vapor barrier layer contains pigments whose aspect ratio and average grain size are different, the pigment of smaller grain size fills the voids formed between the adjacent grains of the pigment which is flatter and large in grain size, in the water vapor barrier layer, and as the water vapor passes through by going around the pigments, such water vapor barrier layer demonstrates higher water vapor barrier property compared to one in which the pigment of smaller grain size is not mixed.

When a pigment is contained in the water vapor barrier layer, the blending quantity of the resin relative to the pigment is preferably in a range of 5 parts by weight or greater but no greater than 200 parts by weight, or more preferably in a range of 10 parts by weight or greater but no greater than 150 parts by weight, of resin (in dry weight) relative to 100 parts by weight of pigment (in dry weight). Also, the water vapor barrier layer can use not only resin and pigment, but also water-soluble polymer, dispersant, thickening agent, moisture-keeping agent, defoaming agent, water resistant agent, dye, fluorescent dye, crosslinking agent, or any of various other auxiliary agents that are normally used.

Under the present invention, the coating quantity of the water vapor barrier layer is 3 g/m² or greater but no greater than 50 g/m², or preferably 5 g/m² or greater but no greater than 40 g/m², or more preferably 7 g/m² or greater but no greater than 30 g/m² in dry weight. If the coating quantity is smaller than 3 g/m², covering the base paper fully with the coating solution becomes difficult and thus sufficient water vapor barrier property may not be achieved, or the gas barrier layer may permeate into the paper base material and consequently uniform gas barrier property may not be achieved. If the coating quantity is greater than 50 g/m², on the other hand, the dry load during coating increases, which is not preferred from the viewpoints of both operation and cost. Also, under the present invention, the wetting tension of the water vapor barrier layer is preferably 10 mN/m or greater but no greater than 60 mN/m, or more preferably 15 mN/m or greater but no greater than 50 mN/m, in terms of water vapor barrier property and adhesion with the gas barrier layer.

### (Gas Barrier Layer)

Under the present invention, examples of the water-soluble polymer used in the gas barrier layer include completely saponified polyvinyl alcohol, partially saponified polyvinyl alcohol, ethylene copolymer polyvinyl alcohol, polyvinyl pyrrolidone, starch, methyl cellulose, carboxy methyl cellulose, sodium alginate. Among these, polyvinyl alcohol and carboxy methyl cellulose are preferred, while polyvinyl alcohol is more preferred, from the viewpoint of gas barrier property.

Under the present invention, preferably a pigment is contained in the gas barrier layer from the viewpoint of gas barrier property. For the pigment used in the gas barrier layer, kaolin, clay, engineered kaolin, delaminated clay, ground calcium carbonate, precipitated calcium carbonate, mica, talc, titanium dioxide, barium sulfate, calcium sulfate, zinc oxide, silicate, silicate salt, colloidal silica, satin white, mica, or other inorganic pigment, or solid, hollow or core-shell type organic pigment, may be used alone, or two or more of them may be combined. Among these, preferably an inorganic pigment is used from the viewpoint of gas barrier property, while more preferably an inorganic pigment whose aspect ratio is 10 or greater is used, while even more preferably an inorganic pigment whose aspect ratio is 30 or greater is used. If a pigment is contained in the gas barrier layer, oxygen and other gases pass through by going around the pigment. Consequently, good water vapor barrier property and excellent gas barrier property in very humid ambience are achieved, compared to a gas barrier layer constituted by a water-soluble polymer in which no pigment is contained.

Under the present invention, preferably the blending ratio (in dry weight) of the pigment and the water-soluble polymer, both contained in the gas barrier layer, is "Pigment/Water-soluble polymer = 1/100 (parts by weight) or greater but no greater than 1000/100 (parts by weight)." If the pigment ratio is outside the above range, sufficient gas barrier property is not expressed. It should be noted that, under the present invention, preferably the pigment is added to, mixed with, and thus blended into the water-soluble polymer in the form of a slurry.

Under the present invention, it is important that a surface-active agent is contained in the gas barrier layer. The surface active agent is a silicone surface-active agent, fluorine surface-active agent, alcohol surface-active agent, acetylene surface-active agent that contains an acetylene group, acetylene diol surface-active agent that contains an acetylene group and two hydroxyl groups, alkyl sulfonate surface-active agent that contains an alkyl group and sulfonic acid, ester surface-active agent, amide surface-active agent, amine surface-active agent, alkyl ether surface-active agent, phenyl ether surface-active agent, sulfate ester surface-active agent, and phenol surface-active agent or a combination of two or more thereof. Among these, preferably acetylene diol surface-active agent is used as it results in a marked improvement of paint leveling property. It should be noted that improved paint leveling property leads to improved uniformity of the gas barrier layer, and consequently to improved gas barrier property.

Under the present invention, the gas barrier layer can use not only water-soluble polymer and pigment, but also dispersant, thickening agent, moisture-keeping agent, defoaming agent, water resistant agent, dye, fluorescent dye, crosslinking agent, and various other auxiliary agents that are normally used.

Under the present invention, the coating quantity of the gas barrier layer is 0.2 g/m² or greater but no greater than 20 g/m² in dry weight. If the coating quantity is smaller than 0.2 g/m², a uniform gas barrier layer cannot be formed and thus sufficient gas barrier property may not be achieved. If the coating quantity is greater than 20 g/m², on the other hand, the dry load during coating increases, which is not preferred from the viewpoints of both operation and cost.

Also, under the present invention, preferably the paint containing water-soluble polymer and surface-active agent, which is used to form the gas barrier layer, is water-based from the viewpoints of increasing the green chemistry need of the resulting packaging material and ensuring safety in a production work environment. It should be noted that "water-based" means not using any organic solvent as a constituent of the paint. In addition, the surface tension of the paint with which to form the gas barrier layer is adjusted preferably to 10 mN/m or greater but no greater than 60 mN/m, or more preferably to 15 mN/m or greater but no greater than 50 mN/m, from the viewpoint of adhesion with the water vapor barrier layer.

It should be noted that, from the viewpoint of adhesion between the water vapor barrier layer and the gas barrier layer, preferably the surface tension of the paint is adjusted to ±20 mN/m relative to the surface wetting tension of the water vapor barrier layer.

### (Formation of Water Vapor Barrier Layer and Gas Barrier Layer)

Under the present invention, in the method for coating the water vapor barrier layer and gas barrier layer any known coating machine may be used. For example, a blade coater, bar coater, roll coater, air knife coater, reverse roll coater, curtain coater, spray coater, size press coater, gate roll coater, may be used. Additionally, for the method to dry the coated layers, a steam heater, gas heater, infrared heater, electric heater, hot air heater, microwave, cylinder dryer, or any other standard method is used, for example.

### (Laminate Layer)

Under the present invention, a laminate layer constituted by a polyethylene, polypropylene, polyvinyl acetate polymer, bio-derived film, biodegradable film, may be provided on at least one side of the paper barrier material comprising a paper base material on which a water vapor barrier layer and a gas barrier layer have been provided. Under the present invention, a bio-derived film refers to a polyester (PTT) based on propane diol obtained by the fermentation method and fossil resource-derived terephthalate, soybean polyol, polyurethane, and other bioplastics having no biodegradability, while a biodegradable film refers to polylactic acid (PLA), starch resin, polyhydroxy alkanoate, and other bioplastics having biodegradability. When used for a packaging material, preferably such laminate layer is primarily constituted by polyethylene, polypropylene, or other polyolefin resin from the viewpoint of protecting the content of, and making it easy to heat-seal, the packaging material. Also, such laminate layer may be provided in one or more numbers according to the purpose.

Under the present invention, a laminate layer constituted by a polyethylene, polypropylene, polyvinyl acetate polymer, bio-derived or biodegradable film, may be provided on at least one side of the paper barrier material comprising a paper base material on which a water vapor barrier layer and a gas barrier layer have been provided. When used for a packaging material, preferably such laminate layer is primarily constituted by polyethylene, polypropylene, or other polyolefin resin, among these, from the viewpoint of protecting the content of, and making it easy to heat-seal, the packaging material. Also, such laminate layer may be provided in one or more numbers according to the purpose. Under the present invention, a bio-derived film refers to a polyester (PTT) based on propane diol obtained by the fermentation method, and fossil resource-derived terephthalate, soybean polyol, polyurethane, and other bioplastics having no biodegradability, while a biodegradable film refers to polylactic acid (PLA), starch resin, polyhydroxy alkanoate, and other bioplastics having biodegradability.

Also, in the method for stacking the laminate layer any known method such as the traditional molten extrusion lamination method, film-based dry lamination method, direct molten coating method, may be used; however, preferably the laminate layer is provided using the molten extrusion lamination method or dry lamination method from the viewpoint of ensuring a uniform laminate layer and ease of handling.

### (Attachment of Barrier Film)

Also, a barrier film may be attached on at least one side of the paper barrier material proposed by the present invention. By attaching a barrier film, excellent gas (oxygen) barrier property is expressed in a very humid ambience. Examples for the barrier film to be attached include a metal foil made of aluminum or other metal, a deposition film produced by depositing any of various metals such as aluminum, a polyvinyl alcohol, ethylene-vinyl alcohol copolymer, polyvinylidene chloride, polyacrylonitrile, or other film whose primary component is resin or film on which any such resin has been coated, and even a ceramic deposition film produced by depositing silicon oxide, aluminum oxide, or other inorganic oxide. Among these barrier films, a deposition film produced by depositing any of various metals such as aluminum, or a ceramic deposition film produced by depositing an inorganic oxide, is preferred. Also, any one or more of these films may be attached according to the purpose.

In the method for attaching the paper barrier material and the barrier film any known method such as the traditional molten extrusion lamination method, film-based dry lamination method, or direct molten coating method may be used.

The paper barrier material proposed by the present invention may be used, in a favorable manner, for packaging materials, containers, cups, and other paper barrier packaging materials used for packaging application.

The paper barrier material proposed by the present invention may be used directly as the paper barrier material, or it may be layered with any of various general-purpose films, barrier films, aluminum foils, to provide a laminate used for food packaging materials, containers, and cups, or for industrial materials. When the present invention is used as a food packaging material, it can be layered with a resin having heat sealing property to enhance the airtightness of the packaging material, protect the content from oxidization due to oxygen, deterioration due to moisture, and achieve a longer preservation period.

Also, when used as an industrial material, the present invention is expected to inhibit intrusion of oxygen and moisture to prevent decay and deterioration, and also to demonstrate other effects such as flavor barrier property to prevent the smell of solvent from leaking out.

### Examples

The present invention is explained in detail below by citing examples. It should be noted that, unless otherwise specified, "part" and "%" in the examples refer to "part by weight" and "percent by weight," respectively. It should also be noted that the coating solutions and obtained functional papers were tested based on the evaluation methods described below.

### (Evaluation Method)

(1) Water vapor permeability: Water vapor permeability was measured using a moisture permeability measuring machine (L80-4000 manufactured by Dr. Lyssy) at a temperature of 40 ±0.5°C and relative humidity of 90 ±2%. It should be noted that measurement was taken on the paper barrier material before formation of a laminate layer.
(2) Oxygen permeability: Oxygen permeability was measured using an oxygen permeability measuring system (OX-TRAN2/21 manufactured by MOCON) under a condition of 23°C-0%RH as well as a condition of 23°C-85%RH. It should be noted that measurement was taken on the paper barrier material before formation of a laminate layer.
(3) Surface tension: Surface tension was measured using an automatic surface tensionmeter (DY-300 manufactured by Kyowa Interface Science) under a condition of 23°C.
(4) Wetting tension: Wetting tension (mN/m = N/mm) was measured using a mixed solution for wetting tension test (Wetting Tension Test Mixture, manufactured by Wako Pure Chemical Industries), by conducting the test according to JIS K 6768.

### [Example 1]

### (Preparation of Paper Base Material)

Leaf bleached kraft pulp (LBKP) of 500 ml in Canadian standard freeness (CSF), and needle bleached kraft pulp (NBKP) of 530 ml in CSF, were blended at a weight ratio of 80/20, to obtain a material pulp. To the material pulp slurry, polyacrylamide (PAM) of 2500000 in molecular weight was added by 0.1% per absolute dry pulp weight as a dry paper strength enhancing agent, alkyl ketene dimer (AKD) was added by 0.35% per absolute dry pulp weight as a sizing agent, polyamide epichlorohydrin (PAEH) resin was added by 0.15% per absolute dry pulp weight as a wet paper strength enhancing agent, and polyacrylamide (PAM) of 10000000 in molecular weight was added by 0.08% per absolute dry pulp weight as a retention aid, after which the mixture was put through a Duo-Former FM papermaking machine at a rate of 300 m/min, to obtain a paper of 59 g/m² in grammage. Next, polyvinyl alcohol (PVA117 manufactured by Kuraray) that had been adjusted to a solids content of 2% was coated to 1.0 g/m² on both sides of the obtained paper using a rod-metering size press, and then dried, to obtain a base paper of 60 g/m² in grammage. The obtained base paper was smoothed by a single pass on a chilled calender at a speed of 300 min/m and line pressure of 50 kgf/cm.

### (Preparation of Coating Solution for Water Vapor Barrier Layer)

To a large-grain engineered kaolin (product name: Barrisurf HX, grain size 9.0 µm, aspect ratio 80 to 100, manufactured by Imerys), which is an inorganic pigment, polyacrylate soda was added (by 0.2 part relative to the inorganic pigment) as a dispersant, after which the mixture was dispersed in a Serie mixer, to prepare a large-grain kaolin slurry of 60% in solids content. Styrene-acrylic copolymer emulsion (product name: X-511-374E manufactured by Saiden Chemical Industry) was blended as a water vapor barrier resin into the obtained kaolin slurry by 100 parts (solids content) per 100 parts of the inorganic pigment, after which paraffin water repellent (product name: MYE-35G, wax-containing polyethylene emulsion, manufactured by Maruyoshi Chemical) was blended by 100 parts (solids content) per 100 parts of the inorganic pigment, to obtain Coating Solution A of 45% in solids content.

### (Preparation of Coating Solution for Gas (Oxygen) Barrier Layer)

Polyvinyl alcohol (product name: PVA117 manufactured by Kuraray), which is a water-soluble polymer, was prepared to a solids content of 10%, and then silicone surface-active agent (product name: SN Wet 125 manufactured by San Nopco) was blended into the obtained polyvinyl alcohol solution by 1 part (solids content) per 100 parts of the polyvinyl alcohol, to obtain Coating Solution B. It should be noted that the surface tension of Coating Solution B was 40 mN/m.

### (Preparation of Paper Barrier Material)

Using a blade coater operating at a coating speed of 300 m/min, Coating Solution A was coated on one side of the obtained base paper to a coating quantity (dry) of 15 g/m², and then dried, after which Coating Solution B was coated on top on the same side, using a roll coater operating at a coating sped of 300 m/min, to a coating quantity (dry) of 5.0 g/m², to obtain a paper barrier material. It should be noted that the surface wetting tension of the water vapor barrier layer was 40 mN/m.

### [Example 2]

A paper barrier material was obtained in the same manner as in Example 1, except that the surface-active agent blended into the coating solution for the gas barrier layer was changed to acetylene diol surface-active agent (product name: Surfynol PSA-336 manufactured by Nissin Chemical Industries). It should be noted that the surface tension of the coating solution for the gas barrier layer was 30 mN/m.

### [Example 3]

A paper barrier material was obtained in the same manner as in Example 1, except that the surface-active agent blended into the coating solution for the gas barrier layer was changed to acetylene diol surface-active agent (product name: Surfynol PSA-336 manufactured by Nissin Chemical Industries), which was blended by 1.5 parts (solids content) per 100 parts of the polyvinyl alcohol. It should be noted that the surface tension of the coating solution for the gas barrier layer was 25 mN/m.

### [Example 4]

A paper barrier material was obtained in the same manner as in Example 1, except that the surface-active agent blended into the coating solution for the gas barrier layer was changed to alkyl sulfonate surface-active agent (product name: Newcol-291-M manufactured by Nippon Nyukazai). It should be noted that the surface tension of the coating solution for the gas barrier layer was 45 mN/m.

### [Example 5]

A paper barrier material was obtained in the same manner as in Example 1, except that, in the preparation of the coating solution for the water vapor barrier layer, the water repellent was changed to paraffin water repellent (product name: WR3900, paraffin wax emulsion, manufactured by Seiko PMC). It should be noted that the surface wetting tension of the water vapor barrier layer was 35 mN/m.

### [Example 6]

A paper barrier material was obtained in the same manner as in Example 1, except that, in the preparation of the coating solution for the water vapor barrier layer, the water repellent was changed to natural oil water repellent (product name: KW-606, carnauba wax emulsion, manufactured by Goo Chemical). It should be noted that the surface wetting tension of the water vapor barrier layer was 50 mN/m.

### [Example 7]

A paper barrier material was obtained in the same manner as in Example 1, except that low-density polyethylene (product name: LC602A manufactured by Japan Polyethylene) was laminated by coextrusion, to a thickness of 30 µm, on both sides of the paper barrier material obtained in Example 1.

### [Example 8]

A paper barrier material was obtained in the same manner as in Example 1, except that straight-chain low-density polyethylene film (product name: LL-XMTN, 20-µm thick, manufactured by Futamura Chemical) was dry-laminated on the barrier side, and biaxially oriented polypropylene film (product name: FOA, 20-µm thick, manufactured by Futamura Chemical) was dry-laminated on the non-barrier side (base paper side), of the paper barrier material obtained in Example 1.

### [Example 9]

A paper barrier material was obtained in the same manner as in Example 1, except that aluminum deposition PET film (product name: MY-15 manufactured by Nakai Industrial) was attached, by the dry lamination method, on the barrier side of the paper barrier material obtained in Example 1.

### [Example 10]

A paper barrier material was obtained in the same manner as in Example 1, except that aluminum deposition PET film (product name: MY-15 manufactured by Nakai Industrial) was attached, by the dry lamination method, on the barrier side of the paper barrier material obtained in Example 2.

### [Example 11]

A paper barrier material was obtained in the same manner as in Example 1, except that aluminum (ceramic) deposition PET film (product name: GL-ARH-F manufactured by Toppan Printing) was attached, by the dry lamination method, on the barrier side of the paper barrier material obtained in Example 1.

### [Example 12]

A paper barrier material was obtained in the same manner as in Example 1, except that EVOH film (product name: Eval Film EF-XL manufactured by Kuraray) was attached, by the dry lamination method, on the barrier side of the paper barrier material obtained in Example 1.

### [Example 13]

A paper barrier material was obtained in the same manner as in Example 1, except that the paper base material was changed to cup base paper (grammage 270 g/m²). Also, a paper barrier material was obtained in the same manner as in Example 1, except that aluminum deposition PET film (product name: MY-15 manufactured by Nakai Industrial) was attached, by the dry lamination method, on the barrier side of the obtained paper barrier material.

### [Example 14]

A paper barrier material was obtained in the same manner as in Example 1, except that, in the preparation of the coating solution for water vapor barrier layer, the blending quantity of the paraffin water repellent was changed from 100 parts (solids content) to 500 parts (solids content) relative to 100 parts of the inorganic pigment, and that the blending quantity of the silicone surface-active agent in the coating solution for the gas barrier layer was changed from 1 part (solids content) to 5 parts (solids content) relative to 100 parts of the polyvinyl alcohol. It should be noted that the surface wetting tension of the water vapor barrier layer was 20 mN/m, while the surface tension of this coating solution for the gas barrier layer was 20 mN/m.

### [Example 15]

A paper barrier material was obtained in the same manner as in Example 1, except that, in the preparation of the coating solution for water vapor barrier layer, the blending quantity of the paraffin water repellent was changed from 100 parts (solids content) to 1000 parts (solids content) relative to 100 parts of the inorganic pigment, and that the blending quantity of the silicone surface-active agent in the coating solution for the gas barrier layer was changed from 1 part (solids content) to 8 parts (solids content) relative to 100 parts of the polyvinyl alcohol. It should be noted that the surface wetting tension of the water vapor barrier layer was 15 mN/m, while the surface tension of this coating solution for the gas barrier layer was 15 mN/m.

### [Example 16]

A paper barrier material was obtained in the same manner as in Example 2, except that, in the preparation of the coating solution for water vapor barrier layer, the blending quantity of the paraffin water repellent was changed from 100 parts (solids content) to 500 parts (solids content) relative to 100 parts of the inorganic pigment, and that the surface-active agent blended into the coating solution for the gas barrier layer was changed to acetylene diol surface-active agent (product name: Surfynol PSA-336 manufactured by Nissin Chemical Industries) and its blending quantity was changed from 1 part (solids content) to 5 parts (solids content) per 100 parts of the polyvinyl alcohol. It should be noted that the surface wetting tension of the water vapor barrier layer was 20 mN/m, while the surface tension of this coating solution for the gas barrier layer was 20 mN/m.

### [Example 17]

A paper barrier material was obtained in the same manner as in Example 1, except that, in the preparation of the coating solution for the water vapor barrier layer, the water repellent was changed to paraffin water repellent (product name: WR3900, paraffin wax emulsion, manufactured by Seiko PMC) and its blending quantity was changed from 100 parts (solids content) to 500 parts (solids content) per 100 parts of the inorganic pigment, and that the blending quantity of the silicone surface-active agent in the coating solution for the gas barrier layer was changed from 1 part (solids content) to 5 parts (solids content) per 100 parts of the polyvinyl alcohol. It should be noted that the surface wetting tension of the water vapor barrier layer was 25 mN/m, while the surface tension of this coating solution for the gas barrier layer was 20 mN/m.

### [Comparative Example 1]

A paper barrier material was obtained in the same manner as in Example 1, except that the gas barrier layer and the water vapor barrier layer were provided on the paper base material in this order.

### [Comparative Example 2]

A paper barrier material was obtained in the same manner as in Example 1, except that no surface-active agent was blended into the coating solution for the gas barrier layer.

### [Comparative Example 3]

A paper barrier material was obtained in the same manner as in Example 1, except that no water vapor barrier layer was provided.

### [Comparative Example 4]

A paper barrier material was obtained in the same manner as in Example 1, except that no gas barrier layer was provided.

**[Table 1]**

| | Coating quantity of water vapor barrier layer | Water vapor permeability | Coating quantity of gas barrier layer | Oxygen permeability (dry) | Oxygen permeability (very humid) |
|---|---|---|---|---|---|
| | g/m² | g/m² - day | g/m² | ml/m² - day | |
| Example 1 | 15.0 | 30 | 5.0 | 0.5 | 1.0 |
| Example 2 | 15.0 | 25 | 5.0 | 0.3 | 0.8 |
| Example 3 | 15.0 | 25 | 5.0 | 0.3 | 0.8 |
| Example 4 | 15.0 | 30 | 5.0 | 0.5 | 1.0 |
| Example 5 | 15.0 | 25 | 5.0 | 0.5 | 0.8 |
| Example 6 | 15.0 | 40 | 5.0 | 0.5 | 1.2 |
| Example 7 | 15.0 | 1.0 | 5.0 | 0.5 | 0.7 |
| Example 8 | 15.0 | 0.5 | 5.0 | 0.5 | 0.5 |
| Example 9 | 15.0 | 0.5 | 5.0 | 0.5 | 0.8 |
| Example 10 | 15.0 | 0.5 | 5.0 | 0.5 | 0.8 |
| Example 11 | 15.0 | 0.5 | 5.0 | 0.5 | 0.8 |
| Example 12 | 15.0 | 1.0 | 5.0 | 0.5 | 0.8 |
| Example 13 | 15.0 | 0.5 | 5.0 | 0.5 | 0.8 |
| Example 14 | 8.0 | 20.0 | 5.0 | 0.5 | 1.0 |
| Example 15 | 8.0 | 15.0 | 5.0 | 0.5 | 1.0 |
| Example 16 | 8.0 | 15.0 | 5.0 | 0.5 | 1.0 |
| Example 17 | 8.0 | 15.0 | 5.0 | 0.5 | 1.0 |
| Comparative Example 1 | 15.0 | 30 | 5.0 | 10000 ↑ | 10000 ↑ |
| Comparative Example 2 | 15.0 | 30 | 5.0 | 10000 ↑ | 10000 ↑ |
| Comparative Example 3 | - | 10000 ↑ | 5.0 | 10000 ↑ | 10000 ↑ |
| Comparative Example 4 | 15.0 | 30 | - | 10000 ↑ | 10000 ↑ |

As shown in Table 1, the paper barrier materials in Examples 1 to 17 exhibited excellent water vapor barrier property and gas (oxygen) barrier property. In particular, the paper barrier material in Example 7 on which a polyethylene resin was laminated by extrusion, and those in Examples 8 to 13 on which a film was attached by the dry lamination method, demonstrated excellent water vapor barrier property.

## Claims

1. A paper barrier material comprising a water vapor barrier layer and a gas barrier layer provided on a paper base material in this order, the paper barrier material **characterized in that** the water vapor barrier layer contains a water vapor barrier resin and a water repellent, and the gas barrier layer contains a water-soluble polymer and a surface-active agent,
wherein the water repellent is a paraffin water repellent primarily constituted by alkane compound, carnauba, lanolin, water repellents based on animal or plant-based natural oil, silicone-containing water repellents that contain silicone or silicone compound, fluorine-containing water repellents that contain fluorine compound, or a combination of two or more thereof;
the surface-active agent is a silicone surface-active agent, a fluorine surface-active agent, an alcohol surface-active agent, an acetylene surface-active agent that contains an acetylene group, an acetylene diol surface-active agent that contains an acetylene group and two hydroxyl groups, an alkyl sulfonate surface-active agent that contains an alkyl group and sulfonic acid, an ester surface-active agent, an amide surface-active agent, an amine surface-active agent, an alkyl ether surface-active agent, a phenyl ether surface-active agent, a sulfate ester surface-active agent, a phenol surface-active agent, or a combination of two or more thereof;
the blending ratio (in dry weight) of the water vapor barrier resin and the water repellent is 1 part by weight to 1000 parts by weight (in dry weight) of water repellent, relative to 100 parts by weight (in dry weight) of water vapor barrier resin;
the coating quantity of the water vapor barrier layer is 3 g/m² to 50 g/m²; and
the coating quantity of the gas barrier layer is 0.2 g/m² to 20 g/m² in dry weight.

2. The paper barrier material according to claim 1, **characterized in that** the water-soluble polymer is polyvinyl alcohol.

3. The paper barrier material according to claim 1 or 2, **characterized in that** the surface-active agent is acetylene diol surface-active agent.

4. The paper barrier material according to any one of claims 1 to 3, **characterized in that** a difference between a wetting tension of the water vapor barrier layer and a surface tension of a paint used to form the gas barrier layer is ±20 mN/m.

5. The paper barrier material according to any one of claims 1 to 4, **characterized in that** a laminate layer whose primary component is polyolefin resin is provided on at least one side of the paper barrier material.

6. The paper barrier material according to claim 5, **characterized in that** the laminate layer is an extruded laminate layer or dry laminate layer.

7. The paper barrier material according to any one of claims 1 to 4, **characterized in that** a barrier film is attached to at least one side of the paper barrier material.

8. The paper barrier material according to claim 7, **characterized in that** the barrier film is a deposition film.

9. A paper barrier packaging material, which is the paper barrier material according to any one of claims 1 to 8 being used for packaging application.

10. A method for manufacturing paper barrier material comprising a water vapor barrier layer and a gas barrier layer provided on a paper base material in this order, where the water vapor barrier layer contains a water vapor barrier resin and a water repellent, and the gas barrier layer contains a water-soluble polymer and a surface-active agent, and a laminate layer whose primary component is polyolefin resin is provided on at least one side of the paper barrier material, the method for manufacturing paper barrier material **characterized in that** the laminate layer is provided according to a molten extrusion lamination method or dry lamination method;
wherein the water repellent is a paraffin water repellent primarily constituted by alkane compound, carnauba, lanolin, water repellents based on animal or plant-based natural oil, silicone-containing water repellents that contain silicone or silicone compound, fluorine-containing water repellents that contain fluorine compound, or a combination of two or more thereof;
the surface-active agent is a silicone surface-active agent, a fluorine surface-active agent, an alcohol surface-active agent, an acetylene surface-active agent that contains an acetylene group, an acetylene diol surface-active agent that contains an acetylene group and two hydroxyl groups, an alkyl sulfonate surface-active agent that contains an alkyl group and sulfonic acid, an ester surface-active agent, an amide surface-active agent, an amine surface-active agent, an alkyl ether surface-active agent, a phenyl ether surface-active agent, a sulfate ester surface-active agent, a phenol surface-active agent, or a combination of two or more thereof;
the blending ratio (in dry weight) of the water vapor barrier resin and the water repellent is 1 part by weight to 1000 parts by weight (in dry weight) of water repellent, relative to 100 parts by weight (in dry weight) of water vapor barrier resin;
the coating quantity of the water vapor barrier layer is 3 g/m² to 50 g/m²; and
the coating quantity of the gas barrier layer is 0.2 g/m² to 20 g/m² in dry weight.

11. The method for manufacturing paper barrier material according to claim 10, **characterized in that** the gas barrier layer is provided by coating a water-based paint.

## Patentansprüche

1. Papierbarrierematerial, umfassend eine Wasserdampfbarriereschicht und eine Gasbarriereschicht, die in dieser Reihenfolge auf einem Papierbasismaterial bereitgestellt sind, wobei das Papierbarrierematerial **dadurch gekennzeichnet ist, dass** die Wasserdampfbarriereschicht ein Wasserdampfbarriereharz und ein wasserabweisendes Mittel enthält, und die Gasbarriereschicht ein wasserlösliches Polymer und ein oberflächenaktives Mittel enthält,
wobei das wasserabweisende Mittel ein paraffinisches wasserabweisendes Mittel ist, das hauptsächlich aus einer Alkanverbindung, Carnauba, Lanolin, wasserabweisenden Mitteln basierend auf tierischen oder Pflanzen-basierten natürlichem Öl, silikonhaltigen wasserabweisenden Mitteln, die Silikon oder eine Silikonverbindung enthalten, fluorhaltigen wasserabweisenden Mitteln, die eine Fluorverbindung enthalten, oder einer Kombination von zwei oder mehreren davon besteht;
das oberflächenaktive Mittel ein Silikon-oberflächenaktives Mittel, ein Fluor-oberflächenaktives Mittel, ein Alkohol-oberflächenaktives Mittel, ein Acetylen-oberflächenaktives Mittel, das eine Acetylengruppe enthält, ein Acetylendiol-oberflächenaktives Mittel, das eine Acetylengruppe und zwei Hydroxylgruppen enthält, ein Alkylsulfonat-oberflächenaktives Mittel, das eine Alkylgruppe und Sulfonsäure enthält, ein Ester-oberflächenaktives Mittel, ein Amid-oberflächenaktives Mittel, ein Amin-oberflächenaktives Mittel, ein Alkylether-oberflächenaktives Mittel, ein Phenyletheroberflächenaktives Mittel, ein Sulfatester-oberflächenaktives Mittel, ein Phenoloberflächenaktives Mittel oder eine Kombination von zwei oder mehreren davon ist;
das Mischungsverhältnis (in Trockengewicht) des Wasserdampfbarriereharzes und des wasserabweisenden Mittels 1 Gewichtsteil zu 1000 Gewichtsteilen (in Trockengewicht) des wasserabweisenden Mittels, bezogen auf 100 Gewichtsteile (in Trockengewicht) des Wasserdampfbarriereharzes, beträgt
die Beschichtungsmenge der Wasserdampfbarriereschicht 3 g/m² bis 50 g/m² beträgt; und
die Beschichtungsmenge der Gasbarriereschicht 0,2 g/m² bis 20 g/m² in Trockengewicht beträgt.

2. Papierbarrierematerial nach Anspruch 1, **dadurch gekennzeichnet, dass** das wasserlösliche Polymer Polyvinylalkohol ist.

3. Papierbarrierematerial nach Anspruch 1 oder 2, **dadurch gekennzeichnet, dass** das oberflächenaktive Mittel Acetylendiol-oberflächenaktives Mittel ist.

4. Papierbarrierematerial nach einem der Ansprüche 1 bis 3, **dadurch gekennzeichnet, dass** eine Differenz zwischen einer Benetzungsspannung der Wasserdampfbarriereschicht und einer Oberflächenspannung einer zur Bildung der Gasbarriereschicht verwendeten Farbe ±20 mN/m beträgt.

5. Papierbarrierematerial nach einem der Ansprüche 1 bis 4, **dadurch gekennzeichnet, dass** auf mindestens einer Seite des Papierbarrierematerials eine Laminatschicht bereitgestellt ist, deren Hauptbestandteil Polyolefinharz ist.

6. Papierbarrierematerial nach Anspruch 5, **dadurch gekennzeichnet, dass** die Laminatschicht eine extrudierte Laminatschicht oder eine Trockenlaminatschicht ist.

7. Papierbarrierematerial nach einem der Ansprüche 1 bis 4, **dadurch gekennzeichnet, dass** ein Barrierefilm auf mindestens einer Seite des Papierbarrierematerials aufgebracht ist.

8. Papierbarrierematerial nach Anspruch 7, **dadurch gekennzeichnet, dass** der Barrierefilm ein Abscheidungsfilm ist.

9. Papierbarriereverpackungsmaterial, wobei das Papierbarrierematerial nach einem der Ansprüche 1 bis 8 für eine Verpackungsanwendung verwendet wird.

10. Verfahren zur Herstellung von Papierbarrierematerial, umfassend eine Wasserdampfbarriereschicht und eine Gasbarriereschicht, die in dieser Reihenfolge auf einem Papierbasismaterial bereitgestellt sind, wobei die Wasserdampfbarriereschicht ein Wasserdampfbarriereharz und ein wasserabweisendes Mittel enthält und die Gasbarriereschicht ein wasserlösliches Polymer und ein oberflächenaktives Mittel enthält, und eine Laminatschicht, deren Hauptkomponente Polyolefinharz ist, auf mindestens einer Seite des Papierbarrierematerials bereitgestellt ist, wobei das Verfahren zur Herstellung von Papierbarrierematerial **dadurch gekennzeichnet ist, dass** die Laminatschicht gemäß einem Schmelzextrusionslaminierungsverfahren oder einem Trockenlaminierungsverfahren bereitgestellt ist;
wobei das wasserabweisende Mittel ein paraffinisches wasserabweisendes Mittel ist, das hauptsächlich aus einer Alkanverbindung, Carnauba, Lanolin, wasserabweisenden Mitteln basierend auf tierischen oder Pflanzen-basierten natürlichem Öl, silikonhaltigen wasserabweisenden Mitteln, die Silikon oder eine Silikonverbindung enthalten, fluorhaltigen wasserabweisenden Mitteln, die eine Fluorverbindung enthalten, oder einer Kombination von zwei oder mehreren davon besteht;
das oberflächenaktive Mittel ein Silikon-oberflächenaktives Mittel, ein Fluor-oberflächenaktives Mittel, ein Alkohol-oberflächenaktives Mittel, ein Acetylen-oberflächenaktives Mittel, das eine Acetylengruppe enthält, ein Acetylendiol-oberflächenaktives Mittel, das eine Acetylengruppe und zwei Hydroxylgruppen enthält, ein Alkylsulfonat-oberflächenaktives Mittel, das eine Alkylgruppe und Sulfonsäure enthält, ein Ester-oberflächenaktives Mittel, ein Amid-oberflächenaktives Mittel, ein Amin-oberflächenaktives Mittel, ein Alkylether-oberflächenaktives Mittel, ein Phenyletheroberflächenaktives Mittel, ein Sulfatester-oberflächenaktives Mittel, ein Phenoloberflächenaktives Mittel oder eine Kombination von zwei oder mehreren davon ist;
das Mischungsverhältnis (in Trockengewicht) des Wasserdampfbarriereharzes und des wasserabweisenden Mittels 1 Gewichtsteil zu 1000 Gewichtsteilen (in Trockengewicht) des wasserabweisenden Mittels, bezogen auf 100 Gewichtsteile (in Trockengewicht) des Wasserdampfbarriereharzes, beträgt
die Beschichtungsmenge der Wasserdampfbarriereschicht 3 g/m² bis 50 g/m² beträgt; und
die Beschichtungsmenge der Gasbarriereschicht 0,2 g/m² bis 20 g/m² in Trockengewicht beträgt.

11. Verfahren zur Herstellung von Papierbarrierematerial nach Anspruch 10, **dadurch gekennzeichnet, dass** die Gasbarriereschicht durch Beschichtung einer wasserbasierenden Farbe bereitgestellt wird.

## Revendications

1. Matériau barrière en papier comprenant une couche barrière contre la vapeur d'eau et une couche barrière contre les gaz pourvues sur un matériau de base en papier dans cet ordre, le matériau barrière en papier étant **caractérisé en ce que** la couche barrière contre la vapeur d'eau contient une résine barrière contre la vapeur d'eau et un produit hydrofuge, et la couche barrière contre les gaz contient un polymère hydrosoluble et un agent tensioactif, dans lequel
le produit hydrofuge est un produit hydrofuge paraffine constitué principalement d'un composé alcane, de carnauba, de lanoline, de produits hydrofuges à base d'huile naturelle animale ou végétale, de produits hydrofuges siliconés contenant une silicone ou un composé siliconé, de produits hydrofuges fluorés contenant un composé au fluor, ou d'une combinaison de deux ou plusieurs de ceux-ci ;
l'agent tensioactif est un agent tensioactif siliconé, un agent tensioactif fluoré, un agent tensioactif à alcool, un agent tensioactif à acétylène contenant un groupe acétylène, un agent tensioactif diol acétylène contenant un groupe acétylène et deux groupes hydroxyle, un agent tensioactif alkylsulfonate contenant un groupe alkyle et un acide sulfonique, un agent tensioactif ester, un agent tensioactif amidé, un agent tensioactif aminé, un agent tensioactif alkyléther, un agent tensioactif phényléther, un agent tensioactif estersulfate, un agent tensioactif phénolique, ou une combinaison de deux ou plusieurs de ceux-ci ;
le rapport de mélange (en masse sèche) de la résine barrière contre la vapeur d'eau et du produit hydrofuge est de 1 à 1000 parties en masse (sèche) de produit hydrofuge pour 100 parties en masse (sèche) de résine barrière contre la vapeur d'eau ;
la quantité de revêtement de la couche barrière contre la vapeur d'eau est de 3 g/m² à 50 g/m² ; et
la quantité de revêtement de la couche barrière contre les gaz est de 0,2 g/m² à 20 g/m² en masse sèche.

2. Matériau barrière en papier selon la revendication 1, **caractérisé en ce que** le polymère hydrosoluble est un alcool polyvinylique.

3. Matériau barrière en papier selon la revendication 1 ou 2, **caractérisé en ce que** l'agent tensioactif est un agent tensioactif acétylènediol.

4. Matériau barrière en papier selon l'une quelconque des revendications 1 à 3, **caractérisé en ce que** la différence entre la tension de mouillage de la couche barrière contre la vapeur d'eau et la tension superficielle d'une peinture utilisée pour former la couche barrière contre les gaz est de ±20 mN/m.

5. Matériau barrière en papier selon l'une quelconque des revendications 1 à 4, **caractérisé en ce qu'**une couche stratifiée dont le composant primaire est une résine polyoléfine est pourvue sur au moins un côté du matériau barrière en papier.

6. Matériau barrière en papier selon la revendication 5, **caractérisé en ce que** la couche stratifiée est une couche stratifiée extrudée ou une couche stratifiée sèche.

7. Matériau barrière en papier selon l'une quelconque des revendications 1 à 4, **caractérisé en ce qu'**un film barrière est attaché à au moins un côté du matériau barrière en papier.

8. Matériau barrière en papier selon la revendication 7, **caractérisé en ce que** le film barrière est un film déposé.

9. Matériau d'emballage à barrière en papier, qui est le matériau barrière en papier selon l'une quelconque des revendications 1 à 8 utilisé pour une application d'emballage.

10. Procédé de fabrication d'un matériau barrière en papier comprenant une couche barrière contre la vapeur d'eau et une couche barrière contre les gaz pourvues sur un matériau de base en papier dans cet ordre, dans lequel la couche barrière contre la vapeur d'eau contient une résine barrière contre la vapeur d'eau et un produit hydrofuge, et la couche barrière contre les gaz contient un polymère hydrosoluble et un agent tensioactif, ainsi qu'une couche stratifiée dont le composant primaire est une résine polyoléfine pourvue sur au moins un côté du matériau barrière en papier, le procédé de fabrication d'un matériau barrière en papier étant **caractérisé en ce que** la couche stratifiée est pourvue conformément à un procédé de stratification par extrusion à l'état fondu ou à un procédé de stratification à sec ; dans lequel
le produit hydrofuge est un produit hydrofuge paraffine constitué principalement d'un composé alcane, de carnauba, de lanoline, de produits hydrofuges à base d'huile naturelle animale ou végétale, de produits hydrofuges siliconés contenant une silicone ou un composé siliconé, de produits hydrofuges fluorés contenant un composé au fluor, ou d'une combinaison de deux ou plusieurs de ceux-ci ;
l'agent tensioactif est un agent tensioactif siliconé, un agent tensioactif fluoré, un agent tensioactif à alcool, un agent tensioactif à acétylène contenant un groupe acétylène, un agent tensioactif diol acétylène contenant un groupe acétylène et deux groupes hydroxyle, un agent tensioactif alkylsulfonate contenant un groupe alkyle et un acide sulfonique, un agent tensioactif ester, un agent tensioactif amidé, un agent tensioactif aminé, un agent tensioactif alkyléther, un agent tensioactif phényléther, un agent tensioactif estersulfate, un agent tensioactif phénolique, ou une combinaison de deux ou plusieurs de ceux-ci ;
le rapport de mélange (en masse sèche) de la résine barrière contre la vapeur d'eau et du produit hydrofuge est de 1 à 1000 parties en masse (sèche) de produit hydrofuge pour 100 parties en masse (sèche) de résine barrière contre la vapeur d'eau ;
la quantité de revêtement de la couche barrière contre la vapeur d'eau est de 3 g/m² à 50 g/m² ; et
la quantité de revêtement de la couche barrière contre les gaz est de 0,2 g/m² à 20 g/m² en masse sèche.

11. Procédé de fabrication d'un matériau barrière en papier selon la revendication 10, **caractérisé en ce que** la couche barrière contre les gaz est pourvue par revêtement d'une peinture à base d'eau.
